# EUROPÄISCHE PATENTANMELDUNG

(11) **EP 1 022 379 A2**
(43) Veröffentlichungstag der Anmeldung: **26.07.2000**
(21) Anmeldenummer: 00100964.6
(22) Anmeldetag: 19.01.2000
(51) Int. Cl.: D21F 1/40, D21G 1/02, F16C 13/00

(54) **Lager für Breitstreckwalzen**

(30) Priorität: 22.01.1999 DE 19902414
(71) Anmelder: FAG OEM und Handel AG, 97421 Schweinfurt (DE)
(72) Erfinder: Stöcklein, Wolfgang, 97422 Schweinfurt (DE); Stütz, Günter, 97464 Niderwerrn (DE)

(57) **Zusammenfassung**

**Verwendung** von Hybridrillenkugellagern in Breitstreckwalzen bestehend aus
a) einem Innenring **(6)**,
b) mehreren Keramikkugeln **(7)**,
c) einem Käfig, oder zwei Kafighälften
d) einem Außenring **(8)**
e) Lebensdauer-Fettschmierung
f) beidseitig außerhalb des Lagers oder im Lager angeordneten Dichtungen **(9)**
wobei die Kugellager zwischen der feststehenden Achse **(1)** mit inneren Befestigungshülsen **(2)** und den rotierenden Walzenmantelsegmenten **(11)** der Breitstreckwalzen für Papier-, Kunststoff- oder Textilbahnen angeordnet sind.

## Beschreibung

### Gebiet der Erfindung

Die Erfindung betrifft die Kugellager in Breitstreckwalzen, die den rotierenden Walzenmantel auf der stehenden Achse lagern.

### Hintergrund der Erfindung

Breitstreckwalzen haben bei der Papier-, Textil- und Folienherstellung die Aufgabe, das erzeugte Produkt glatt und längsfaltenfrei zu führen. Hierbei gibt es Breitstreckwalzen, die bei Umgebungstemperaturen von ca. 40°C betrieben werden und andere, die im oder nach dem Trockenbereich bis zu 150° C Umgebungstemperatur eingesetzt werden. Diese Breitstreckwalzen werden üblicherweise durch die gefertigte Produktbahn angetrieben und laufen bisher bei Drehzahlen von ca. 1200 U / min entspricht n x dm von ca. 300.000 mm / min (n = Drehzahl/min und dm = Außendurchmesser des Lagers in mm.) und geringer radialer Last pro Lagerstelle. Der in Achsrichtung in einzelne Sektionen unterteilte Walzenmantel wird jeweils von einzelnen normalen Stahlkugellagern getragen. Bei allen Anwendungen rotiert der Außenring und der Innenring steht still.

Bei der Berechnung der Lebensdauer dieser Kugellager ergeben sich nach DIN ISO 281 (modifizierte Lebensdauer) Werte von weit über 100.000 Betriebsstunden. Die Drehzahl der Lager im Einsatzfall liegt mit 1200 U / min unter der Drehzahlgrenze von ca. 3000 U / min (entspricht n x dm ca. 750.000 mm / min). Nach diesen theoretischen Berechnungen müßten die Rillenkugellager an dieser Stelle problemlos mindestens 20 Jahre laufen. Die Betriebsdauer dieser Kugellager in Breitstreckwalzen beträgt im praktischen Einsatz nach heutigen Erkenntnissen 1 bis 2 Jahre selten 3 Jahre. Das entspricht einer Lebensdauer von deutlich weniger als 20.000 Betriebsstunden.

Seit Jahren gibt es schon intensive Bemühungen die Probleme dieser Lagerstelle in Breitstreckwalzen zu lösen und hinsichtlich der Betriebssicherheit und Lebensdauer zu optimieren. Dabei wurden die Fettschmierung, die Ölschmierung, die Kühlung der Lager, die Gestaltung des Fettraumes usw. optimiert.

Die nachfolgend genannten fünf Schriften sollen diese langjährigen Bemühungen belegen.

In der DE AS 21 59 897 wird der Vorteil von ölumlaufgeschmierten Wälzlagern gegenüber fettgeschmierten Wälzlagern diskutiert, um höhere Drehzahlen zu erreichen. (Spalte 2, Z 56 ff) "Außerdem wird durch die erfindungsgemäße Maßnahme trotz höherer Drehzahlen der Verschleiß, insbesondere an den Kugellagern geringer als bei den bekannten Lösungen gehalten".

In der DE 27 25 331 C2 wird die Optimierung der Ölzufuhr / Ölabfuhr diskutiert, um höhere Drehzahlanforderungen abzudecken. (Spalte 2, Z 65 ff) "... auszubilden, daß das zugeführte überschüssige Öl mit Sicherheit abgeführt wird, so daß ein sicherer und störungsfreier Betrieb bei hohen Drehzahlen erhalten wird".

In der DE 41 24 651 C1 wird der Außenring der Rillenkugellagerung in den Breitstreckwalzen zur Walze hin wärmeisoliert, damit von der gekühlten Welle aus weniger Temperaturdifferenz im Wälzlager gegenüber dem warmen Walzenmantelsegment besteht. (Spalte 2, Z 18 ff) "... nur geringe Temperaturdifferenz zwischen Wälzlageraußenring und Wälzlagerinnenring entsteht. Die Gesamtverringerung und Vergleichmäßigung der Wärmebelastung führt zu einer wesentlichen Erhöhung der Betriebssicherheit und der Betriebsdauer der Wälzlager und damit der Breitstreckwalzen".

In der DE 33 24 160 A1 wird die Gestaltung der Innenkontur des Wälzlagers und die Gestaltung sowie Abdichtung des Öl- oder Fettraumes um das Wälzlager herum diskutiert. (Spalte 5, Z 6ff) "... der Rückführung des durch die Drehbewegung des Lagers nach außen getretenen Fettes an die Laufflächen des Wälzlagers garantiert über einen relativ langen Zeitraum, daß den Verschleißflächen der Wälzlager ausreichend Fell zur Verfügung steht, wodurch die Laufdauer einer Breitstreckwalze wesentlich erhöht wird".

In der DE GM 86 10 958.8 wird für jedes Wälzlager in der Breitstreckwalze ein Thermoelement mit Anzeige vorgesehen. (Spalte 6, Z 26 ff) "Der Erfindung liegt die Aufgabe zugrunde eine Breitstreckwalze der aufgezeigten Gattung so auszubilden, daß ungewollte Stillstandszeiten vermieden werden und bei Bedarf eine zielgerichtete Nachfettung eines bestimmten Wälzlagers ohne Schwierigkeiten möglich ist.... und eine Schmierstoffzuführungsleitung zugeordnet ist".

In all diesen Schriften ist das zentrale Problem dieser Lagerstelle in Breitstreckwalzen nicht erkannt. Der Hauptausfallgrund der Kugellager in den Breitstreckwalzen ist auf das Problem des Gleitens der Kugeln im Betrieb des Lagers (Kugeln rutschen ohne Drehung im Kugellager) zurückzuführen. Dieses Gleiten der Kugeln hat zwei Ursachen:

Zum ersten sind die bei bestimmten Betriebszuständen zu geringen Hertz' schen Pressungen zwischen Kugel und Wälzlagerring zu nennen, mit der Folge, daß die Antriebskräfte für den Kugelkranz mit Käfig zu gering werden, um diesen in Drehung zu versetzen oder zu halten, was die Lebensdauer wesentlich durch Schlupf und den dann eintretenden Verschleiß reduziert.

Zum zweiten ist die hohe Adhäsionsneigung der Stahl - Stahlpaarung zu nennen, die das Gleiten der Stahlkugel unterstützen.

Daraus ergibt sich die Aufgabe ein Wälzlager zu finden, das bei den gegebenen Einsatzbedingungen in Breitstreckwalzen eine deutlich längere Betriebsdauer erreicht.

### Zusammenfassung der Erfindung

Erfindungsgemäß wird diese Aufgabe durch die Verwendung eines Hybridrillenkugellagers (Laufringe aus Wälzlagerstahl, Kugeln aus Keramik) mit optimierter Kugelanzahl, wie in den Schutzansprüchen beschrieben, gelöst.

Obwohl es Hybridlager schon mehr als 25 Jahre auf dem Wälzlagermarkt gibt, hat bis heute kein Anwender in Breitstreckwalzen die Vorteile dieser Lagerungsweise genutzt. Die genannten Schriften belegen, daß die bekannten Probleme dieser Lagerstelle bis heute nicht zufriedenstellend gelöst wurden, obwohl dabei auch technisch sehr aufwendige Lösungen eingesetzt wurden.

Die Anzahl der Kugeln soll so optimiert werden, daß die resultierende Belastung der Kugeln in einem Bereich liegt, bei der eine sichere Mitnahme der Kugeln gewährleistet ist, wobei die sich ergebende Lebensdauer für das Kugellager zwischen 50.000 und 100.000 Betriebsstunden liegt. Die Berechnung erfolgt nach DIN ISO 281.

Die Vorteile der Hybridlager gegenüber den Wälzlagern mit Stahlkugeln sind folgende:
- Die geringere Neigung der Wälzpartner (Keramik zu Wälzlagerstahl) zu Adhäsion und damit verbunden die geringere Neigung zum Gleiten
- Im günstigeren Verhalten der Keramikkugel bei Schmierfilmdurchbruch sowie Mangelschmierung.
- Einer niedrigeren Schmierstoffbelastung verbunden mit einer geringeren Reibung (Wärmeentwicklung) an der Wälzkontaktstelle durch die geringere elastische Verformung der Keramikkugeln. Damit steigt auch die Gebrauchsdauer des eingesetzten Fettes.
- Der geringeren Masse der Keramikkugeln und damit auch einer geringeren Masse des Käfig-Kugelsystems.

### Beschreibung der Zeichnung

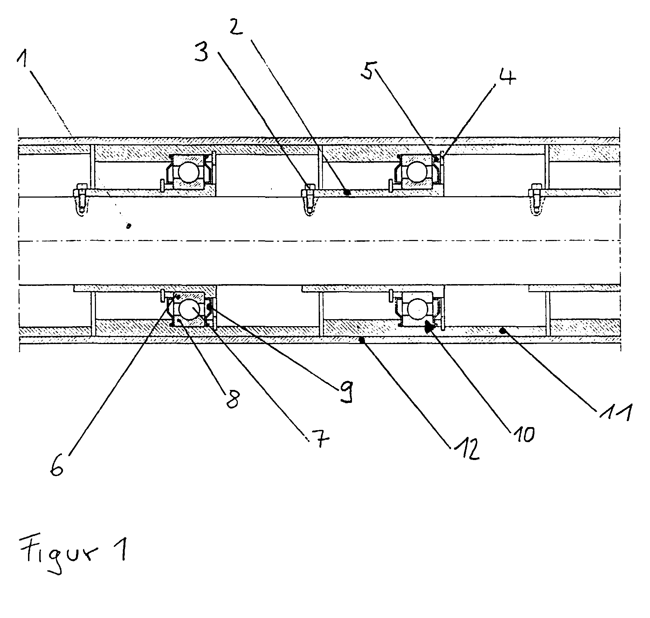

In Figur 1 wird ein Ausschnitt einer Breitstreckwalze gezeigt. Die Kugellager **10** mit Keramikkugeln **7** sind über die innere Befestigungshülse **2** auf die Achse **1** aufgeschoben. Der Außenring **8** der Kugellager **10** trägt je ein Walzenmantelsegment **11** das über den Zwischenring **5** und den Sicherungsring **4** axial geführt wird. Über den Walzenmantelsegmenten **11** ist der Walzenmantel **12** angeordnet. Die Dichtungen **9** sind außerhalb des Kugellagers **10** angeordnet.

### Bezugszeichenliste

1. Achse
2. Innere Befestigungshülse
3. Halteschraube
4. Sicherungsring
5. Zwischenring
6. Lagerinnenring
7. Keramikkugeln
8. Lageraußenring
9. Dichtung
10. Kugellager
11. Walzenmantelsegment
12. Walzenmantel

## Patentansprüche

1. Kugellager für Breitstreckwalzen für Papier-, Kunststoff- oder Textilbahnen angeordnet zwischen einer feststehenden Achse **(1)** und Walzenmantelsegmenten **(11)**, wobei die Kugellager **(10)** Dichtungen **(9)** besitzen und für Lebensdauer fettgeschmiert sind, **dadurch gekennzeichnet**, daß Kugellager **(10)** mit Keramikkugeln **(7)** eingesetzt werden und die Anzahl der Keramikkugeln so ausgewählt wird, daß die rechnerische Lebensdauer Lₙ zwischen 50.000 und 100.000 Betriebsstunden liegt.

2. **Verwendung** von Hybridrillenkugellagern in Breitstreckwalzen bestehend aus
a) einem Innenring **(6)**,
b) mehreren Keramikkugeln **(7)**,
c) einem Käfig, oder zwei Kafighälften
d) einem Außenring **(8)**
e) Lebensdauer-Fettschmierung
f) beidseitig außerhalb des Lagers oder im Lager angeordneten Dichtungen **(9)**
wobei die Kugellager **(10)** zwischen der feststehenden Achse **(1)** mit inneren Befestigungshülsen **(2)** und den rotierenden Walzenmantelsegmenten **(11)** der Breitstreckwalzen für Papier-, Kunststoff- oder Textilbahnen angeordnet sind.
